# EUROPEAN PATENT SPECIFICATION

(11) **EP 4 056 430 B1**
(45) Date of publication and mention of the grant of the patent: **13.09.2023**
(21) Application number: 21161415.1
(22) Date of filing: 09.03.2021
(51) Int. Cl.: B60R 19/02, B60D 1/56, B60R 19/18, B62D 25/20

(54) **TOWING DEVICE ARRANGEMENT, BUMPER BEAM AND A PROCESS OF ARRANGING A TOWING DEVICE ON A CROSSMEMBER**
SCHLEPPVORRICHTUNGSANORDNUNG, STOSSFÄNGER UND VERFAHREN ZUR ANORDNUNG EINER SCHLEPPVORRICHTUNG AN EINEM QUERTRÄGER
AGENCEMENT DE DISPOSITIF DE REMORQUAGE, POUTRE DE PARE-CHOCS ET PROCÉDÉ D'AGENCEMENT D'UN DISPOSITIF DE REMORQUAGE SUR UNE TRAVERSE

(43) Date of publication of application: 14.09.2022
(73) Proprietor: AUTOTECH ENGINEERING S.L., 48340 Amorebieta-Etxano, Bizkaia (ES)
(72) Inventor: Muskos, Per, 972 51 Luleå (SE)
(74) Representative: Ehrner & Delmar Patentbyrå AB

(56) References cited:
- CN-A- 110 962 513
- DE-A1-102012 018 708
- DE-A1-102013 211 794
- US-A1- 2015 048 635

## Description

### TECHNICAL FIELD

The invention relates to towing device arrangement, a bumper beam comprising such an arrangement and a process of arranging a towing device on a crossmember.

### BACKGROUND

Most vehicles comprise a towing device for making it possible to tow another vehicle or to allow the vehicle to be towed. Often, a vehicle comprises two towing devices; a first towing device arranged at the rear bumper beam to tow another vehicle, and a second towing device arranged in the front bumper beam to allow the vehicle to be towed by another vehicle.

A towing device commonly comprises a tow tube which is fastened to a bumper beam, specifically to a crossmember of a bumper beam. The tow tube conventionally comprises internal threads for screw attachment of a tow hook. Hence, the tow hook may preferably be detachable from the tow tube, which is useful because it would otherwise extend out from the front and/or rear bumper beam of the car with the risk of injuries or material damages.

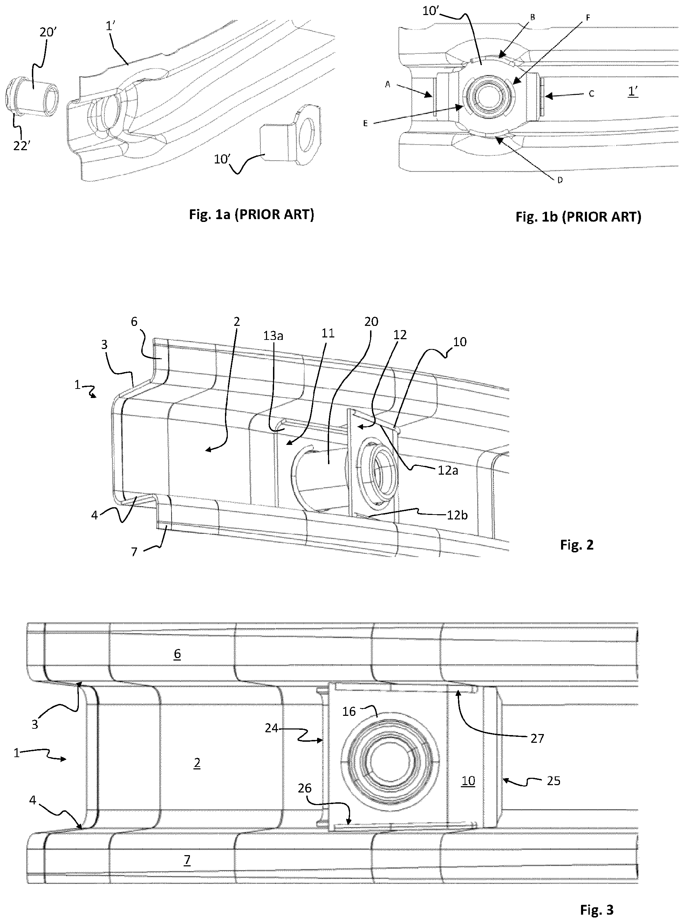

In view of that the towing device is provided to tow a vehicle it needs to be firmly secured to the bumper beam. This has conventionally been solved by adapting the shape of the crossmember of the bumper beam to make sure that the tow tube may be firmly fixed, at least in the longitudinal direction of the vehicle. A bracket is conventionally arranged to ultimately fix the position of the tow tube to the crossmember and to fix it in the lateral direction. Such a prior art arrangement is shown in Figs. 1a and 1b, which will be briefly descried below.

Another towing device is known from KR 10151542 B2, in which a bracket is arranged on the inside of the crossmember, wherein the bracket comprises a through hole of which the periphery is arranged to support a circumferential rim provided around an end portion of the tube. This arrangement has the advantage of being constructed to be attached to the crossmember of a bumper beam in a manner that implies little adaptation to the crossmember. On the other hand, it implies other constructional disadvantages such as that it requires space on the inside of the bumper beam. Document CN110962513 A discloses further a bracket used to attach a towing device whereby a part of the bracket is attached to the web portion of the crossmember.

It would be advantageous to achieve a towing device arrangement overcoming, or at least alleviating, at least one or some of the drawbacks of the prior art.

### SUMMARY OF THE INVENTION

It is an object of the invention to provide a towing device arrangement, a bumper beam and a process of arranging towing device on a crossmember of a bumper beam, that combine the benefits of an efficient assembly with a highly reliable and space efficient construction.

According to a first aspect the invention relates to a towing device arrangement for a bumper beam of a vehicle, comprising:
- a crossmember having a U-shaped section with a web portion and two leg portions extending outwards from opposed sides of the web portion, the crossmember being arranged to be fastened to crash boxes of a vehicle,
- a tow tube, and
- a bracket arranged to attach the tow tube to the crossmember, which bracket comprises a first portion and a second portion which is connected to the first portion via an angled portion,
wherein the first portion of the bracket has a mainly flat shape arranged to align with and attach to the web portion of the crossmember and comprises a first hole arranged to align with a through hole through the web portion of the crossmember through which a first end of the tow tube is arranged to be received, wherein the second portion of the bracket extends in an angle with respect to the first portion and comprises a second hole for receiving a second end of the tow tube, wherein the bracket is welded to the crossmember.

The inventive towing device arrangement provides a reliable attachment of a towing device including tow tube to a crossmember of a bumper beam. The arrangement is advantageous in that no adaptation is needed on the shape of the crossmember for the attachment of the tow tube, and that there is no need of a bracket or the like on the inside of the crossmember. Instead, a bracket is arranged in the interior of the crossmember.

In specific embodiments of the towing device arrangement the second portion of the bracket is arranged to extend between the opposed leg portions of the crossmember and is welded to both leg portions. This is advantageous as it further increases the strength of the attachment.

In specific embodiments of the towing device arrangement, the first portion of the bracket is welded to the web portion of the crossmember.

In specific embodiments of the towing device arrangement, the tow tube is welded to the first portion of the bracket at the first hole and to the second portion of the bracket at the second hole. This is advantageous as it provides for the possibility of attaching the tow tube to the bracket in a first step and to, in a subsequent step, attach the bracket to the crossmember to provide an efficient and reliable assembly process.

In specific embodiments of the towing device arrangement, the second hole is circular and has a diameter arranged to receive the second end of the tow tube, wherein a main plane of the second portion of the bracket is arranged to extend substantially orthogonally to the axial direction of the tow tube.

In specific embodiments of the towing device arrangement, the tow tube has flange at its second end arranged to abut a peripheral portion of the second hole of the second portion of the bracket. The provision of the flange decreases the need of accuracy in the fit between the tow tube and the bracket.

According to a second aspect the invention relates to a bumper beam that comprises towing device arrangement as described above.

In specific embodiments of the bumper beam the web portion of the crossmember is arranged to be attached to two space apart crash boxes, and wherein a cover plate is attached to an upper and a lower rim of the upper and lower leg portions, respectively, the cover plate being arranged to cover a gap between the two mutually opposed leg portions of the crossmember, an opening being provided in the cover plate to allow access to the tow tube.

A cover plate may be arranged to cover a gap formed between the two mutually opposed leg portions of the crossmember, wherein an opening is provided in the cover plate to allow access to the tow tube.

In specific embodiments of the bumper beam the opposed leg portions of the crossmember comprise an upper and a lower rim, respectively, which are arranged to be attached to two space apart crash boxes, wherein the web portion of the crossmember is arranged to face the outside of a vehicle when arranged on a vehicle, and wherein the through hole in the web portion is arranged to allow access to the tow tube from outside the vehicle. According to a third aspect the invention relates to a process of attaching a towing device to a crossmember of a bumper beam of a vehicle, the crossmember having a U-shaped section and comprising a web portion and two mutually opposed leg portions extending from opposite sides of the web portion outwards away from the vehicle when arranged on a vehicle, the process comprising:
- in a first step, securing a tow tube to a bracket comprising a first portion and a second portion which is connected to the first portion via an angled portion and extends in an angle with respect to the first portion, the first portion comprising a first hole for receiving a first end of the tow tube, and the second portion comprising a second hole for receiving a second end of the tow tube, and
- in a second step, securing the bracket to the U-shaped crossmember,
wherein in the second step, aligning the first portion of the bracket to the web portion of the crossmember and attaching the first portion to the web portion by welding.

This is an advantageous process as it allows the tow tube to be attached to the bracket in a first step and to, in a subsequent step, attach the bracket to the crossmember. Also, the process implies that hardly any adaptions need to be made to shape of the crossmember to fit the towing device.

In specific embodiments of the process the second step further comprises attaching the second portion of the bracket to the two mutually opposed leg portions by welding.

In specific embodiments of the process the tow tube is secured to the bracket by welding the first portion of the bracket to the first end of the tow tube and the second portion of the bracket to the second end of the tow tube.

In specific embodiments of the process a flange is provided at the second end of the tow tube, wherein the tow tube is entered into the second hole of the bracket to abut a peripheral portion around the second hole, wherein a weld is provided between the flange and the peripheral portion around the second hole.

Other embodiments and advantages will be apparent from the detailed description and the appended drawings.

### BRIEF DESCRIPTION OF THE DRAWINGS

Below, specific embodiments of the invention will be described with reference to the appended drawings, of which:
- Figs. 1a-b: show a towing device according to the prior art,
- Figs. 2-3: show a first embodiment of a towing device in accordance with the invention arranged inside a crossmember of a bumper beam,
- Figs. 4-6: show a towing device in the form of a tow tube and bracket from different angles,
- Fig. 7: is a front perspective view of a bumper beam in which a towing device is arranged,
- Fig. 8: is an exploded view of a bumper beam and a towing device in accordance with the invention,
- Fig. 9: is a side view of a towing device with a tow tube without a flange,
- Fig. 10: is a perspective view of a bumper beam showing a towing device inside a crash box, and
- Fig. 11: is a cut perspective view of the bumper beam of Fig. 10.

### DESCRIPTION OF A PRIOR ART TOWING DEVICE ARRANGEMENT

In Figs. 1a and 1b a towing device according to the prior art is shown. In Fig. 1a the towing device is shown in an exploded view, e.g. prior to assembly. As is illustrated in the drawing the tow tube 20' comprises a circumferential flange 22' adapted to abut the backside of the crossmember 1'. The crossmember 1' has a flat circumferential support surface adapted to provide a full support for the flange 22' on the tow tube 20'. The process step of providing this flat support surface is costly because a high precision is required to achieve the desired tight contact surface.

As is further illustrated in Fig. 1a a bracket 10' is provided to fix the second end of the tow tube 20'. In Fig. 1b it is illustrated how the bracket 10' is welded to the crossmember 1' by means of four welds A, B, C and D, and to the tow tube 20' by means of two welds E, F. The combination of the bracket 10' and the flange to crossmember abutment provides a rigid and reliable attachment of the tow tube 20' to the crossmember 1'.

### DETAILED DESCRIPTION OF THE SHOWN EMBODIMENTS

Figs. 2 and 3, show a towing device arrangement for a bumper beam according to an aspect of the invention. The arrangement comprises a crossmember 1, which is elongate and arranged to extend in a lateral direction when arranged on a vehicle and has a U-shaped cross section with a web portion 2 and two leg portions 3 and 4 extending outwards from opposed sides of the web portion 2, preferably along the whole length of the crossmember. In a first embodiment, as shown in Figs. 1-3 and 7-8 the leg portions 3 and 4 extend away from the vehicle when arranged on a vehicle, the web portion 2 being arranged to be fastened to crash boxes of a vehicle, as will be described further below.

In this specification the geometry of some portions of the parts of the towing device arrangement are described with respect to their orientation or mutual positions when arranged on a bumper beam of a vehicle. Hence, upper and lower portions or parts denote their mutual positions when arranged on a bumper beam on a vehicle, and the terms inner and outer are used to denote orientations or mutual positions with respect to the vehicle.

The inventive towing device comprises a tow tube 20 and a bracket 10, which is attached to the crossmember 1 to form a towing device arrangement. The bracket 10 comprises a first portion 11 and a second portion 12 which are connected to each other by an angled portion 13, wherein the second portion 12 extends outwards with respect to the first portion 11 between the two leg portions 3 and 4 of the crossmember 1. Preferably, the bracket 10 is V-shaped, such that the angled portion 13 is arranged to form an acute angle between second portion 12 and the first portion 11 of the bracket, and such that the second portion 12 diverges away from the first portion 11.

The bracket 10 is formed to fit tightly within the space available between the web portion 2 and the upper and lower leg portions 3 and 4 of the crossmember 1.

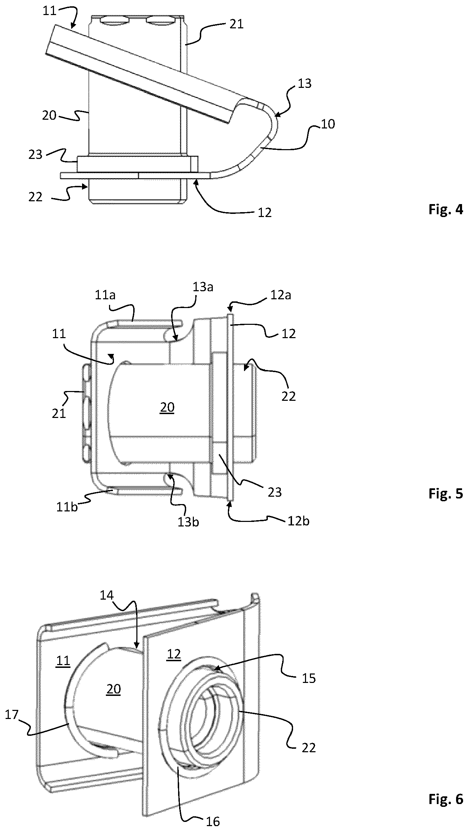

As is illustrated in Fig. 6 a second hole 15 is provided in the second portion 12 of the bracket 10 in which a second end 22 of the tow tube 20 is received, and the first portion 11 comprises a first hole 14 in which a first end 21 of the tow tube 20 is received.

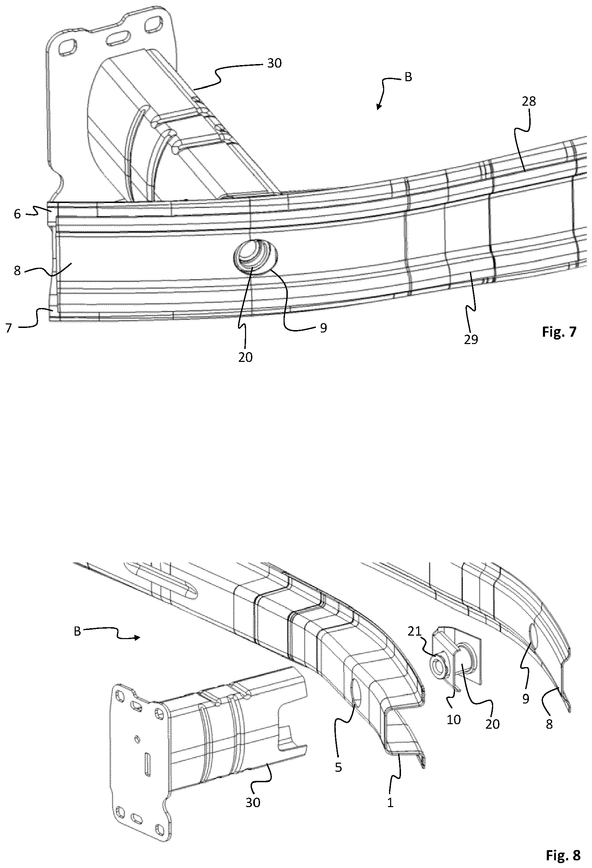

The first portion 11 of the bracket 10 is arranged to align with and abut to the web portion 2 of the crossmember 1 and the first hole 14 is arranged to align with a through hole 5 through the web portion 2 of the crossmember 1 (see Fig. 8) through which the first end 21 of the tow tube 20 is arranged to be received.

As is best illustrated in Fig 5, the first portion 11 of the bracket 10 may have curved upper and lower edges 11a and 11b, respectively, adapted to follow and abut the transition between the web portion 2 and the upper and lower leg portions 3 and 4, respectively, of the crossmember. Also illustrated in Fig. 5, the second portion 12 of the bracket 10 has an upper and a lower edge 12a and 12b, respectively.

As illustrated in Fig. 2, the second portion 12 of the bracket 10 has a height that corresponds to the space between the opposed leg portions 3 and 4 of the crossmember 1, such that the upper and lower edges 12a and 12b of the second portion 12 may be welded to the respective leg portions 3 and 4. Also, in the shown embodiment, the first portion 11 of the bracket 10 is welded to the web portion 2 of the crossmember 1. Specifically, the first portion 11 has a mainly flat shape that is adapted to be aligned with the web portion 2 of the crossmember 1 so as to form a solid support for the tow device and a solid base for an attachment, preferably including welds.

In specific embodiments, as illustrated in Fig. 3, the second portion 12 of the bracket 10 is welded to both the opposed leg portions 3 and 4 of the crossmember 1. A first front weld 26 may be arranged along a contact line between the second portion 12 of the bracket 10 and the upper leg portion 3, and a second front weld 27 may be arranged along a contact line between the second portion 12 of the bracket 10 and the lower leg portion 4.

In addition, a first rear weld 24 may be arranged along a contact line between an edge of the first portion 11 of the bracket 10 and the web portion 2, and a second rear weld 25 may be arranged along a contact line between the web portion 2 and the transition between the first portion 11 the angled portion 13.

Other welds may of course be arranged in addition to, or instead of the illustrated welds. Also, the bracket 10 may have an alternative shape which would call for the welds to be positioned elsewhere, where appropriate contact lines or contact points for welding are formed.

An advantage of that the bracket 10 is adapted to the shape of crossmember 1, is that it facilitates the production of the crossmember 1 and reduces the number of process steps, in view of that no specific consideration needs to be taken to the shape of the tow tube 20, except for the provision of a through hole 5, big enough to allow the first end 21 of the tow tube 20 pass through the crossmember 1. Preferably though, there is no flange arranged at the first end 21 of the tow tube 20. Tests have shown that such a flange is not needed to obtain sufficient structural strength, but that in an arrangement as the inventive arrangement, the tow tube 20 is securely held at place by means of the bracket 10 and well-situated welds. As a consequence, the production of the crossmember 1 may by significantly facilitated, in view of that the shape of the crossmember 1 need not be specifically adapted around the through hole 5. Further, the size of the through hole 5 may preferably be oversized with respect to the size of the tow tube 20, which further reduces the precision needed and facilitates the production.

In specific embodiments the bracket 10 is welded to the crossmember 1 and the tow tube 20 is welded to the bracket 10, preferably in separate steps.

As illustrated in Fig 6, the second end 22 of the tow tube 20 may be welded to the second portion 12 of the bracket 10 at the second hole 15 by means of a first arcuate weld 16, and the first end 21 of the tow tube 20 may be welded to the first portion 11 of the bracket 10 at the first hole 14 by means of second arcuate weld 17.

The second hole 15 may be circular and have a diameter arranged to receive the second end 22 of the tow tube 20. Also, the tow tube 20 may have a rim or a flange 23 at its second end arranged to abut a peripheral portion of the second hole 15 of the second portion 12 of the bracket 10. The flange may be a circular flange extending all around the tow tube 20, or it may be comprised of interrupted protrusions along the circumference of the tow tube 20. An advantage of the flange 23 is that it implies that the fit between the tow tube 20 and the second hole 15 need not have a high precision but may include a gap, because such a gap will be covered by the flange 23, so as to guarantee a good contact for the provision of welds. For other reasons it may however be advantageous not to have a flange on the tow tube 20, as will be described further below.

The first hole 14 in rear potion 11 of the bracket 10 may have an oval shape to provide a close fit to the first end of the tow tube 20. In view of that the tow tube 20 will extend in an angle with respect to the normal of the plane of the first portion 11, the first hole 14 should preferably have a greater extension in the lateral direction than in the vertical direction, when arranged on a bumper beam of a vehicle. In an alternative embodiment, the first hole may be a horse-shoe shaped slit with an opening arranged to receive the first end 21 of the tow tube 20.

In Figs. 7 and 8 a bumper beam B is shown, which comprises a towing device arrangement as described above.

Fig. 7 is a perspective view of a bumper beam B, which illustrates how a cover plate 8 may be arranged to cover a gap between the two mutually opposed leg portions 3 and 4 of the crossmember 1, wherein an opening 9 is provided in the cover plate 8 in alignment with the tow tube 20 to allow access to the tow tube 20. The opening 9 may include a cap or the like to cover the opening and prevent dirt and debris from entering the tow tube 20. As is conventional in the art, the tow tube 20 comprises an internal thread for screw connection to a screw connector of a tow hook.

The cover plate 8 includes an upper edge 28 and a lower edge 29 which are fastened, preferably by welding, to the upper and lower rims 6 and 7, respectively, of the crossmember 1.

Fig. 8 is an exploded view that illustrates how the crossmember 1 is received in a crash box 30. Normally, the crossmember 1 is attached to two crash boxes 30 at opposite sides of the crossmember 1. The crash box 30 preferably has a shape adapted to tightly receive the U-shaped crossmember 1 so as to abut both the web portion 2 and the mutually opposed leg portions 3 and 4, which extend from opposite sides of the web portion 2, in this embodiment outwards, away from the vehicle when arranged on a vehicle.

The crossmember 1 comprises a through hole 5 arranged to align with the first hole 14 of the web portion 2 of the crossmember 1, through which the first end 21 of the tow tube 20 is arranged to be received. In the shown embodiment, the through hole 5 is arranged in line with the crash box 30, such that the first end 21 of the tow tube 20 is received into the interior of the crash box 30.

As is illustrated in Fig. 8, the tow tube 20 will be arranged with its axial extension in parallel with the longitudinal extension of the crash box 30 and hence in parallel with the longitudinal extension of the vehicle. The first portion 11 of the bracket 10 is adapted to align with the web portion 2, and the second portion 12 of the bracket 10 may be arranged to extend orthogonally to the longitudinal direction of the vehicle as illustrated by the crash box 30, thereby allowing the tow tube 20 to be arranged in parallel the longitudinal direction of the vehicle. This is achieved in that the angle between the first and the second portions 11, 12 of the bracket 10, formed by the angled portion 13, is the same as the angle formed between a plane of the web portion 2 at the position of the through hole 5 and a plane orthogonal to the longitudinal direction of the vehicle.

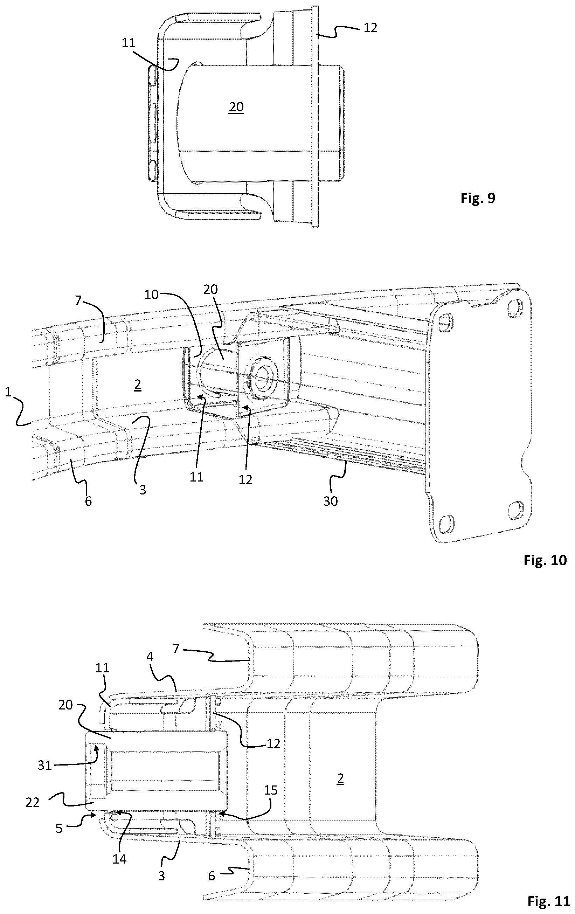

In Fig. 9 a towing device according to second embodiment is shown, in which the tow tube 20 has no flange. This embodiment is inter alia advantageous in that it allows the tow tube 20 to be arranged in either direction with respect to the bracket 10. In the embodiments shown above, the second end 22 of the tow tube 20, which comprises the internal thread for connection to a tow hook is arranged through the second hole 15 in the second portion 12 of the bracket 10.

However, in an alternative embodiment the second end 22 of the tow tube 20, with the internal thread for connection to a tow hook, may be arranged through the first hole 14 in the first portion 11 of the bracket 10.

Namely, the bracket 10 may be adapted to also arrange a tow device in an inverted crossmember, where the web portion 2 faces away from the vehicle when arranged on a vehicle and wherein the upper and lower rims 6 and 7 of the upper and lower leg portions 3 and 4, respectively, are arranged to be fastened to the crash boxes of a vehicle.

In such an embodiment, which is illustrated in Fig. 10, the second end 22 of the tow tube 20 is arranged to extend through the web portion 2 of the crossmember 1, such that a tow hook may be arranged to the second end 22 of the tow tube 20.

When the crossmember 1 is arranged in this "inverted" manner, the first portion 11 of the bracket will still be adapted to align with the web portion 2. However, in order to achieve a tow tube 20 that extend in the longitudinal direction of the vehicle, the bracket 10 is rotated 180 degrees, such that the angled portion 13 thereof is outside of the tow tube, i.e. further away from centre of the crossmember 1.

Namely, the crossmember 1 has an arcuate shape, which is convex such that it bends outwards away from the vehicle between the crash boxes 30 and forms a slightly rounded edge outside of the crash boxes. Hence, the plane of the web portion 2 is not orthogonal to the longitudinal direction of the vehicle at the attachment point to the crash boxes, close to which the tow device is attached to the crossmember 1. Ideally, the angle between the first and the second portions 11, 12 of the bracket 10 is the same as the angle formed between the plane of the web portion 2 and a plane orthogonal to the longitudinal direction of the vehicle. Thereby, the second portion 12 of the bracket 10 may be arranged to extend orthogonal to the longitudinal direction of the vehicle, and allowing the tow tube to be arranged in parallel with the longitudinal direction of the vehicle by allowing the tow tube to be received at a right angle into the second hole 15 of the second portion 12 of the bracket 10.

Hence, as is illustrated in Fig. 10, the tow tube 20 will be arranged with its axial extension in parallel with the longitudinal extension of the crash box 30 and hence with the longitudinal extension of the vehicle.

In the embodiment shown in Figs 10 and 11, the crash box 30 has a shape adapted to fit inside the crossmember 1 and to abut the upper and lower rims 7 and 8 thereof, respectively. The tow tube device is preferably arranged to extend in the longitudinal extension of the crash box, at least partly inside the crash box 30.

As is illustrated in the sectional view of Fig. 11, the tow tube 20 is in this embodiment arranged with its second end 22 extending through the web portion 2 of the crossmember 1, with an internal thread 31 accessible from outside of the vehicle for arranging a tow hook.

Further, from Fig. 11 it is apparent that the through hole 5 is wider than the first hole 14 of the first portion 11 of the bracket. This illustrates an advantage of the invention in that the precision of the crossmember at and around the through hole need not be very high, such that tolerances are allowable in the production of the crossmember. The lowered need of precision of the crossmember is compensated for by the bracket, which may be produced with a higher precision at a relatively low cost in view of its lower demands with respect to structural strength. Thereby, the process of producing the crossmember 1 may be facilitated without compromising its structural strength.

Below, the process of assembling the towing device will be described.

In a first step, with reference to Fig, 4, the tow tube 20 is secured to the bracket 10. The second end 22 of the tow tube 20 should be entered into the second hole 15 of the second portion 12, and the first end 21 of the tow tube 20 should be entered into the first hole 14 of the first portion 11. This may be done in any preferred order, but with the embodiment of the tow tube with a flange arranged to abut the inside of the second hole it is preferable to firstly enter the first end 21 of the tow tube 20 into the first hole 14 of the first portion 11 and subsequently enter the second end 22 of the tow tube 20 into the second hole 15. With a tow tube with no flange or an outer flange, the tow tube is preferably slided into position through both hole 14 and hole 15 from either direction.

As described above, the first hole 14 may preferably have an oval shape, allowing the tow tube 20 to be received at an angle with respect to the first hole, and to tilt with respect to it. Further though, in order to allow the opposite, second end 22 of the tow tube 20 to pass inside the free end of the second portion 12 of the bracket 10, in the case with a flange between the holes, the first portion 11 and the second portion 12 may be flexed apart. This flexing is allowed in that the angled portion 13 have a shoulder formed by two opposed recesses 13a and 13b. Once both ends of the tow tube have been inserted into the respective holes the tow tube is positioned such that the flange 23 will abut the peripheral portion of the inside of the second hole 15.

In this position, the second end 22 of the tow tube 20 is welded to the peripheral portion of the second hole 15, and the first end 21 of the tow tube 20 is welded to the peripheral portion of the first hole 14.

In a subsequent step, the bracket 10 is secured to the U-shaped crossmember 1. Specifically, the first portion 11 of the bracket 10 is aligned to the web portion 2 of the crossmember 1 and the first portion 11 is attached to the web portion 2 by welding. As illustrated in Fig. 3, a first rear weld 24 may be arranged along a contact line between an edge of the first portion 11 of the bracket 10 and the web portion 2, and a second rear weld 25 may be arranged along a contact line between the angled portion 13 and the web portion 2.

The second portion 12 of the bracket 10 may be welded to the opposed leg portions 3 and 4 of the crossmember 1 by arranging a first front weld 26 along a contact line between the upper edge 12a of the second portion 12 of the bracket 10 and the upper leg portion 3, and a second front weld 27 along a contact line between the lower edge 12b of the second portion 12 of the bracket 10 and the lower leg portion 4.

As an alternative to welds, the bracket 10 may be provided with attachment portions allowing the bracket to be screwed to crossmember 10.

Above, the invention has been described with reference to specific embodiments. The invention is however not limited to these embodiments. It is obvious to a person skilled in the art that other embodiments are possible within the scope of the following claims.

## Claims

1. A towing device arrangement for a bumper beam (B) of a vehicle, comprising
- a crossmember (1) having a U-shaped section with a web portion (2) and two leg portions (3, 4) extending outwards from opposed sides of the web portion (2), the crossmember (1) being arranged to be fastened to crash boxes (28) of a vehicle,
- a tow tube (20), and
- a bracket (10) arranged to attach the tow tube (20) to the crossmember (1), which bracket comprises a first portion (11) and a second portion (12) which is connected to the first portion (11) via an angled portion (13),
**characterised in that**
the first portion (11) of the bracket (10) has a mainly flat shape arranged to align with and attach to the web portion (2) of the crossmember (1) and comprises a first hole (14) arranged to align with a through hole (5) through the web portion (2) of the crossmember (1) through which a first end (21) of the tow tube (20) is arranged to be received, wherein the second portion (12) of the bracket (10) extends in an angle with respect to the first portion (11) and comprises a second hole (15) for receiving a second end (22) of the tow tube (20), wherein the bracket (10) is welded to the crossmember (1).

2. The towing device arrangement according to claim 1, wherein the second portion (12) of the bracket (10) is arranged to extend between the opposed leg portions (3, 4) of the crossmember (1) and is welded to both leg portions (3, 4).

3. The towing device arrangement according to anyone of the preceding claims, wherein the first portion (11) of the bracket (10) is welded to the web portion (2) of the crossmember (1).

4. The towing device arrangement according to anyone of the preceding claims, wherein the tow tube (20) is welded to the first portion (11) of the bracket at the first hole (14) and to the second portion (12) of the bracket (10) at the second hole (15).

5. The towing device arrangement according to anyone of the preceding claims, wherein the second hole (15) is circular and has a diameter arranged to receive the second end (22) of the tow tube (20), and wherein a main plane of the second portion (12) of the bracket (10) is arranged to extend substantially orthogonally to the axial direction of the tow tube (20).

6. The towing device arrangement according to claim 5, wherein the tow tube (20) has flange (23) at its second end (22) arranged to abut a peripheral portion of the second hole (15) of the second portion (12) of the bracket (10).

7. A bumper beam (B) **characterised in that** it comprises a towing device arrangement according to anyone of the preceding claims.

8. The bumper beam (B) according to claim 7, wherein the web portion (2) of the crossmember (10) is arranged to be attached to two space apart crash boxes (30), and wherein a cover plate (8) is attached to an upper and a lower rim (6, 7) of the upper and lower leg portions (3, 4), respectively, the cover plate (8) being arranged to cover a gap between the two mutually opposed leg portions (3, 4) of the crossmember (10), an opening (9) being provided in the cover plate (8) to allow access to the tow tube (20).

9. The bumper beam (B) according to claim 7, wherein the opposed leg portions (3, 4) of the crossmember (10) comprise an upper and a lower rim (6, 7), respectively, which are arranged to be attached to two space apart crash boxes (30), and wherein the web portion (2) of the crossmember (10) is arranged face the outside of a vehicle when arranged on a vehicle, wherein the through hole (5) in the web portion (2) is arranged to allow access to the tow tube (20).

10. Process of attaching a towing device to a crossmember (1) of a bumper beam of a vehicle, the crossmember (1) having a U-shaped section and comprising a web portion (2) and two mutually opposed leg portions (3, 4) extending from opposite sides of the web portion (2), the process comprising:
- in a first step, securing a tow tube (20) to a bracket (10) comprising a first portion (11) and a second portion (12) which is connected to the first portion (11) via an angled portion (13) and extends in an angle with respect to the first portion (11), the first portion (11) comprising a first hole (14) for receiving a first end (21) of the tow tube (20), and the second portion (12) comprising a second hole (15) for receiving a second end (22) of the tow tube (20), and
- in a second step, securing the bracket (10) to the U-shaped crossmember (1),
**characterised by**
in the second step, aligning the first portion (11) of the bracket (10), which has a mainly flat shape, to the web portion (2) of the crossmember (1) and attaching the bracket (10) to the crossmember (1) by welding.

11. The process according to claim 10, wherein the second step further comprises attaching the second portion (12) of the bracket (10) to the two mutually opposed leg portions (3, 4) by welding.

12. The process according to claim 10 or 11, wherein the tow tube (20) is secured to the bracket (10) by welding the first portion (11) of the bracket to the first end (21) of the tow tube (20) and the second portion (12) of the bracket to the second end (22) of the tow tube (20).

13. The process according to anyone of the claims 10 - 12, wherein a flange (23) is provided at the second end of the tow tube (20) and wherein the tow tube (20) is entered into the second hole (15) of the bracket such that the flange (23) abuts a peripheral portion around the second hole (15) of the second portion (12) of the bracket (10) and wherein a weld is provided between the flange (23) and the peripheral portion around the second hole (15).

## Patentansprüche

1. Schleppvorrichtungsanordnung für einen Stoßfängerträger (B) eines Fahrzeugs, umfassend
- einen Querträger (1) mit einem U-förmigen Abschnitt mit einem Stegabschnitt (2) und zwei Schenkelabschnitten (3, 4), die sich von gegenüberliegenden Seiten des Stegabschnitts (2) erstrecken, wobei der Querträger (1) dazu angeordnet ist, an Pralldämpfern (28) eines Fahrzeugs befestigt zu werden,
- ein Schlepprohr (20) und
- eine Halterung (10), die dazu angeordnet ist, das Schlepprohr (20) an dem Querträger (1) anzubringen, wobei die Halterung einen ersten Abschnitt (11) und einen zweiten Abschnitt (12) umfasst, der über einen abgewinkelten Abschnitt (13) mit dem ersten Abschnitt (11) verbunden ist,
**dadurch gekennzeichnet, dass** der erste Abschnitt (11) der Halterung (10) eine im Wesentlichen flache Gestalt hat, die so angeordnet ist, dass sie auf den Stegabschnitt (2) des Querträgers (1) ausgerichtet ist und daran angebracht werden kann und ein erstes Loch (14) umfasst, das so angeordnet ist, dass es auf ein Durchgangsloch (5) durch den Stegabschnitt (2) des Querträgers (1) ausgerichtet ist, durch das ein erstes Ende (21) des Schlepprohrs (20) zur Aufnahme angeordnet ist, wobei sich der zweite Abschnitt (12) der Halterung (10) in einem Winkel bezüglich des ersten Abschnitts (11) erstreckt und ein zweites Loch (15) zur Aufnahme eines zweiten Endes (22) des Schlepprohrs (20) umfasst, wobei die Halterung (10) an den Querträger (1) geschweißt ist.

2. Schleppvorrichtungsanordnung nach Anspruch 1, wobei der zweite Abschnitt (12) der Halterung (10) so angeordnet ist, dass er sich zwischen den gegenüberliegenden Schenkelabschnitten (3, 4) des Querträgers (1) erstreckt und an beide Schenkelabschnitte (3, 4) geschweißt ist.

3. Schleppvorrichtungsanordnung nach einem der vorhergehenden Ansprüche, wobei der erste Abschnitt (11) der Halterung (10) an den Stegabschnitt (2) des Querträgers (1) geschweißt ist.

4. Schleppvorrichtungsanordnung nach einem der vorhergehenden Ansprüche, wobei das Schlepprohr (20) an dem ersten Loch (14) an den ersten Abschnitt (11) der Halterung geschweißt ist und an dem zweiten Loch (15) an den zweiten Abschnitt (12) der Halterung (10).

5. Schleppvorrichtungsanordnung nach einem der vorhergehenden Ansprüche, wobei das zweite Loch (15) kreisförmig ist und einen Durchmesser hat, der so angeordnet ist, dass er das zweite Ende (22) des Schlepprohrs (20) aufnimmt, und wobei eine Hauptebene des zweiten Abschnitts (12) der Halterung (10) so angeordnet ist, dass sie sich im Wesentlichen orthogonal zu der axialen Richtung des Schlepprohrs (20) erstreckt.

6. Schleppvorrichtungsanordnung nach Anspruch 5, wobei das Schlepprohr (20) einen Flansch (23) an seinem zweiten Ende (22) hat, der so angeordnet ist, dass er an einem Umfangsabschnitt des zweiten Lochs (15) des zweiten Abschnitts (12) der Halterung (10) anliegt.

7. Stoßfängerträger (B), **dadurch gekennzeichnet, dass** er eine Schleppvorrichtungsanordnung nach einem der vorhergehenden Ansprüche umfasst.

8. Stoßfängerträger (B) nach Anspruch 7, wobei der Stegabschnitt (2) des Querträgers (10) so angeordnet ist, dass er an zwei beabstandeten Pralldämpfern (30) angebracht ist, und wobei eine Abdeckplatte (8) an einem oberen und einem unteren Rand (6, 7) des oberen bzw. des unteren Schenkelabschnitts (3, 4) angebracht ist, wobei die Abdeckplatte (8) so angeordnet ist, dass sie einen Spalt zwischen den beiden sich gegenüberliegenden Schenkelabschnitten (3, 4) des Querträgers (10) abdeckt, wobei in der Abdeckplatte (8) eine Öffnung (9) vorgesehen ist, um Zugriff auf das Schlepprohr (20) zu gestatten.

9. Stoßfängerträger (B) nach Anspruch 7, wobei die sich gegenüberliegenden Schenkelabschnitte (3, 4) des Querträgers (10) jeweils einen oberen und einen unteren Rand (6, 7) umfassen, die so angeordnet sind, dass sie an zwei beabstandeten Pralldämpfern (30) angebracht sind, und wobei der Stegabschnitt (2) des Querträgers (10) so angeordnet ist, dass er der Außenseite des Fahrzeugs zugewandt ist, wenn er an einem Fahrzeug angeordnet ist, wobei das Durchgangsloch (5) in dem Stegabschnitt (2) so angeordnet ist, dass es Zugang zu dem Schlepprohr (20) gestattet.

10. Verfahren zum Anbringen einer Schleppvorrichtung an einem Querträger (1) eines Stoßfängerträgers eines Fahrzeugs, wobei der Querträger (1) einen U-förmigen Abschnitt mit einem Stegabschnitt (2) und zwei sich gegenüberliegenden Schenkelabschnitten (3, 4) aufweist, die sich von gegenüberliegenden Seiten des Stegabschnitts (2) erstrecken, wobei das Verfahren Folgendes umfasst:
- in einem ersten Schritt Befestigen eines Schlepprohrs (20) an einer Halterung (10), die einen ersten Abschnitt (11) und einen zweiten Abschnitt (12) umfasst, der über einen abgewinkelten Abschnitt (13) mit dem ersten Abschnitt (11) verbunden ist und sich bezüglich des ersten Abschnitts (11) in einem Winkel erstreckt, wobei der erste Abschnitt (11) ein erstes Loch (14) zur Aufnahme eines ersten Endes (21) des Schlepprohrs (20) umfasst und der zweite Abschnitt (12) ein zweites Loch (15) zur Aufnahme eines zweiten Endes (22) des Schlepprohrs (20) umfasst und
- in einem zweiten Schritt Befestigen der Halterung (10) an dem U-förmigen Querträger (1),
**gekennzeichnet durch**
in dem zweiten Schritt, Ausrichten des ersten Abschnitts (11) der Halterung (10), der eine im Wesentlichen flache Gestalt hat, auf den Stegabschnitt (2) des Querträgers (1) und Anbringen der Halterung (10) durch Schweißen an dem Querträger (1).

11. Verfahren nach Anspruch 10, wobei der zweite Schritt ferner das Anbringen des zweiten Abschnitts (12) der Halterung (10) durch Schweißen an den beiden sich gegenseitig gegenüberliegenden Schenkelabschnitten (3, 4) umfasst.

12. Verfahren nach Anspruch 10 oder 11, wobei das Schlepprohr (20) durch Schweißen des ersten Abschnitts (11) der Halterung an das erste Ende (21) des Schlepprohrs (20) und des zweiten Abschnitts (12) der Halterung an das zweite Ende (22) des Schlepprohrs (20) an der Halterung (10) befestigt wird.

13. Verfahren nach einem der Ansprüche 10 - 12, wobei an dem zweiten Ende des Schlepprohrs (20) ein Flansch (23) vorgesehen ist und wobei das Schlepprohr (20) so in das zweite Loch (15) der Halterung eingeführt wird, dass der Flansch (23) an einem Umfangsabschnitt um das zweite Loch (15) des zweiten Abschnitts (12) der Halterung (10) herum anliegt, und wobei zwischen dem Flansch (23) und dem Umfangsabschnitt um das zweite Loch (15) herum eine Schweißverbindung vorgesehen wird.

## Revendications

1. Agencement de dispositif de remorquage pour une poutre pare-chocs (B) d'un véhicule, comprenant
- une traverse (1) pourvue d'une section en U avec une partie âme (2) et deux parties ailes (3, 4) s'étendant vers l'extérieur à partir de côtés opposés de la partie âme (2), la traverse (1) étant agencée de manière à être fixée à des boîtes-tampons (28) d'un véhicule,
- un tube de remorquage (20), et
- un support (10) agencé de manière à attacher le tube de remorquage (20) à la traverse (1), lequel support comprend une première partie (11) et une deuxième partie (12) qui est reliée à la première partie (11) par l'intermédiaire d'une partie coudée (13),
**caractérisé en ce que**
la première partie (11) du support (10) est pourvue d'une forme essentiellement plate agencée de manière à s'aligner avec la partie âme (2) de la traverse (1) et à s'y attacher, et comprend un premier trou (14) agencé de manière à s'aligner avec un trou traversant (5) traversant la partie âme (2) de la traverse (1) au travers duquel une première extrémité (21) du tube de remorquage (20) est agencée pour être reçue, la deuxième partie (12) du support (10) s'étendant en formant un angle avec la première partie (11) et comprenant un deuxième trou (15) destiné à recevoir une deuxième extrémité (22) du tube de remorquage (20), le support (10) étant soudé à la traverse (1).

2. Agencement de dispositif de remorquage selon la revendication 1, dans lequel la deuxième partie (12) du support (10) est agencée de manière à s'étendre entre les parties ailes (3, 4) opposées de la traverse (1) et est soudée aux deux parties ailes (3, 4).

3. Agencement de dispositif de remorquage selon l'une quelconque des revendications précédentes, dans lequel la première partie (11) du support (10) est soudée à la partie âme (2) de la traverse (1).

4. Agencement de dispositif de remorquage selon l'une quelconque des revendications précédentes, dans lequel le tube de remorquage (20) est soudé à la première partie (11) du support au niveau du premier trou (14) et à la deuxième partie (12) du support (10) au niveau du deuxième trou (15).

5. Agencement de dispositif de remorquage selon l'une quelconque des revendications précédentes, dans lequel le deuxième trou (15) est circulaire et pourvu d'un diamètre agencé de manière à recevoir la deuxième extrémité (22) du tube de remorquage (20), et dans lequel un plan principal de la deuxième partie (12) du support (10) est agencé de manière à s'étendre sensiblement orthogonalement à la direction axiale du tube de remorquage (20).

6. Agencement de dispositif de remorquage selon la revendication 5, dans lequel le tube de remorquage (20) est pourvu d'une bride (23) au niveau de sa deuxième extrémité (22) agencée de manière à venir buter contre une partie périphérique du deuxième trou (15) de la deuxième partie (12) du support (10).

7. Poutre pare-chocs (B) **caractérisée en ce qu'**elle comprend un agencement de dispositif de remorquage selon l'une quelconque des revendications précédentes.

8. Poutre pare-chocs (B) selon la revendication 7, dans laquelle la partie âme (2) de la traverse (10) est agencée de manière à être attachée à deux boîtes-tampons (30) espacées, et dans laquelle un cache (8) est attaché à des rebords supérieur et inférieur (6, 7) respectivement des parties ailes supérieure et inférieure (3, 4), le cache (8) étant agencé de manière à couvrir un espace entre les deux parties ailes (3, 4) mutuellement opposées de la traverse (10), une ouverture (9) étant ménagée dans le cache (8) pour donner accès au tube de remorquage (20).

9. Poutre pare-chocs (B) selon la revendication 7, dans laquelle les parties ailes (3, 4) opposées de la traverse (10) comprennent respectivement des rebords supérieur et inférieur (6, 7), lesquels sont agencés de manière à être attachés à deux boîtes-tampons (30) espacées, et dans laquelle la partie âme (2) de la traverse (10) est agencée de manière à être tournée vers l'extérieur d'un véhicule lorsqu'elle est agencée sur un véhicule, le trou traversant (5) dans la partie âme (2) étant agencé de manière à donner accès au tube de remorquage (20).

10. Procédé d'attache d'un dispositif de remorquage à une traverse (1) d'une poutre pare-chocs d'un véhicule, la traverse (1) étant pourvue d'une section en U et comprenant une partie âme (2) et deux parties ailes (3, 4) mutuellement opposées s'étendant à partir de côtés opposés de la partie âme (2), le procédé comprenant :
- à une première étape, l'assujettissement d'un tube de remorquage (20) à un support (10) comprenant une première partie (11) et une deuxième partie (12) qui est reliée à la première partie (11) par l'intermédiaire d'une partie coudée (13) et s'étend en formant un angle avec la première partie (11), la première partie (11) comprenant un premier trou (14) destiné à recevoir une première extrémité (21) du tube de remorquage (20), et la deuxième partie (12) comprenant un deuxième trou (15) destiné à recevoir une deuxième extrémité (22) du tube de remorquage (20), et
- à une deuxième étape, l'assujettissement du support (10) à la traverse (1) en U,
**caractérisé par**
à la deuxième étape, l'alignement de la première partie (11) du support (10), qui est pourvue d'une forme essentiellement plate, avec la partie âme (2) de la traverse (1) et l'attache du support (10) à la traverse (1) par soudage.

11. Procédé selon la revendication 10, dans lequel la deuxième étape comprend en outre l'attache de la deuxième partie (12) du support (10) aux deux parties ailes (3, 4) mutuellement opposées par soudage.

12. Procédé selon la revendication 10 ou 11, dans lequel le tube de remorquage (20) est assujetti au support (10) par soudage de la première partie (11) du support à la première extrémité (21) du tube de remorquage (20) et de la deuxième partie (12) du support à la deuxième extrémité (22) du tube de remorquage (20).

13. Procédé selon l'une quelconque des revendications 10 à 12, dans lequel une bride (23) est formée au niveau de la deuxième extrémité du tube de remorquage (20), et dans lequel le tube de remorquage (20) est introduit dans le deuxième trou (15) du support de telle sorte que la bride (23) vienne buter contre une partie périphérique autour du deuxième trou (15) de la deuxième partie (12) du support (10), et dans lequel une soudure est formée entre la bride (23) et la partie périphérique autour du deuxième trou (15).
